# EUROPEAN PATENT APPLICATION

(11) **EP 4 238 930 A1**
(43) Date of publication of application: **06.09.2023**
(21) Application number: 21900391.0
(22) Date of filing: 12.11.2021
(51) Int. Cl.: C01B 3/26

(54) **HYDROGEN SUPPLY SYSTEM**

(30) Priority: 03.12.2020 JP 2020201062
(71) Applicant: ENEOS Corporation, Chiyoda-ku Tokyo 100-8162 (JP)
(72) Inventor: SEIKE Tadashi, Tokyo 100-8162 (JP); IKI Hideshi, Tokyo 100-8162 (JP); MAEDA Seiji, Tokyo 100-8162 (JP)
(74) Representative: Grünecker Patent- und Rechtsanwälte PartG mbB
(86) International application number: PCT/JP2021/041737
(87) International publication number: WO 2022/118636

(57) **Abstract**

A hydrogen supply system supplying hydrogen, the hydrogen supply system including: a dehydrogenation reaction unit acquiring a hydrogen-containing gas by performing a dehydrogenation reaction of a raw material containing a hydride; and a control unit controlling the hydrogen supply system, in which in a case in which generation of the hydrogen-containing gas in the dehydrogenation reaction unit stops, the control unit causes the hydrogen supply unit to supply hydrogen to the dehydrogenation reaction unit, and the hydrogen supply unit supplies at least one of the hydrogen-containing gas between the dehydrogenation reaction unit and a vapor-liquid separating unit separating a dehydrogenation product from the hydrogen-containing gas and the hydrogen-containing gas separated by the vapor-liquid separating unit separating a dehydrogenation product from the hydrogen-containing gas to the dehydrogenation reaction unit.

## Description

### Technical Field

The present disclosure relates to a hydrogen supply system performing supply of hydrogen.

### Background Art

As a conventional hydrogen supply system, for example, a hydrogen supply system disclosed in Patent Literature 1 is known. The hydrogen supply system disclosed in Patent Literature 1 includes a tank that stores a hydride of an aromatic hydrocarbon as a raw material, a dehydrogenation reaction unit that acquires hydrogen by performing a dehydrogenation reaction of the raw material supplied from the tank, a vapor-liquid separating unit that performs vapor-liquid separation of hydrogen acquired by the dehydrogenation reaction unit, and a hydrogen refining unit that refines hydrogen for which vapor-liquid has been performed.

### Citation List

### Patent Literature

[Patent Literature 1] Japanese Unexamined Patent Publication No. 2006-232607

### Summary of Invention

### Technical Problem

In the hydrogen supply system as described above, in a case in which generation of a hydrogen-containing gas in the dehydrogenation reaction unit stops, there are case in which supply of a raw material stops, and an inert gas such as nitrogen is supplied to the dehydrogenation reaction unit. In accordance with this, a raw material remaining in the dehydrogenation reaction unit is purged. However, in this method, a state in which the dehydrogenation reaction unit is at a high temperature, and hydrogen is absent is formed, and thus there are cases in which a dehydrogenation catalyst deteriorates in accordance with generation of coke and the like. On the other hand, in a case in which hydrogen is extracted from a hydrogen refining device side and is supplied to the dehydrogenation reaction unit, an input energy for hydrogen not used as a product is necessary in a hydrogen manufacturing device. Thus, it has been requested to improve system efficiency of a hydrogen supply system while deterioration of a dehydrogenation catalyst in the dehydrogenation reaction unit is inhibited.

The present disclosure is devised for solving the problems described above, and an object thereof is to provide a hydrogen supply system capable of improving efficiency in a hydrogen supply system while inhibiting deterioration of a dehydrogenation catalyst in the dehydrogenation reaction unit.

### Solution to Problem

In order to solve the problems described above, according to the present disclosure, there is a provided a hydrogen supply system supplying hydrogen including: a dehydrogenation reaction unit acquiring a hydrogen-containing gas by performing a dehydrogenation reaction of a raw material containing a hydride; and a control unit controlling the hydrogen supply system, in which in a case in which generation of the hydrogen-containing gas in the dehydrogenation reaction unit stops, the control unit causes the hydrogen supply unit to supply hydrogen to the dehydrogenation reaction unit, and the hydrogen supply unit supplies at least one of the hydrogen-containing gas between the dehydrogenation reaction unit and the vapor-liquid separating unit separating a dehydrogenation product from the hydrogen-containing gas and the hydrogen-containing gas separated by the vapor-liquid separating unit separating a dehydrogenation product from the hydrogen-containing gas to the dehydrogenation reaction unit.

In the hydrogen supply system, the dehydrogenation reaction unit acquires a hydrogen-containing gas by performing a dehydrogenation reaction of a raw material containing a hydride. The dehydrogenation reaction unit performs a dehydrogenation reaction in a state in which a dehydrogenation catalyst is heated. Here, in a case in which generation of the hydrogen-containing gas in the dehydrogenation reaction unit stops, the control unit supplies hydrogen to the dehydrogenation reaction unit. In accordance with this, even when generation of hydrogen-containing gas stops, a state in which hydrogen is present in the dehydrogenation reaction unit is formed. Thus, in accordance with the dehydrogenation reaction unit being in a high-temperature state and a state in which hydrogen is not present being formed, deposition of coke in the dehydrogenation catalyst can be avoided. Furthermore, the hydrogen supply unit supplies at least one of a hydrogen-containing gas between the dehydrogenation reaction unit and the vapor-liquid separating unit separating a dehydrogenation product from the hydrogen-containing gas and a hydrogen-containing gas separated by the vapor-liquid separating unit separating a dehydrogenation product from a hydrogen-containing gas to the dehydrogenation reaction unit. In this way, the hydrogen supply unit supplies a hydrogen-containing gas on an upstream side of the hydrogen refining unit to the dehydrogenation reaction unit. Thus, it is unnecessary to extract hydrogen used for inhibiting deterioration of the dehydrogenation catalyst of the dehydrogenation reaction unit from the hydrogen refining unit, and thus energy input to the hydrogen refining unit can be reduced. As described above, while deterioration of the dehydrogenation catalyst of the dehydrogenation reaction unit is inhibited, system efficiency of the hydrogen supply system can be improved.

The hydrogen supply unit may supply hydrogen from the outside. In such a case, the hydrogen supply unit can supply hydrogen without consideration to the remaining amount of hydrogen present within the system.

### Advantageous Effects of Invention

According to the present disclosure, a hydrogen supply system capable of improving efficiency of the hydrogen supply system while inhibiting deterioration of a dehydrogenation catalyst in the dehydrogenation reaction unit can be provided.

### Brief Description of Drawings

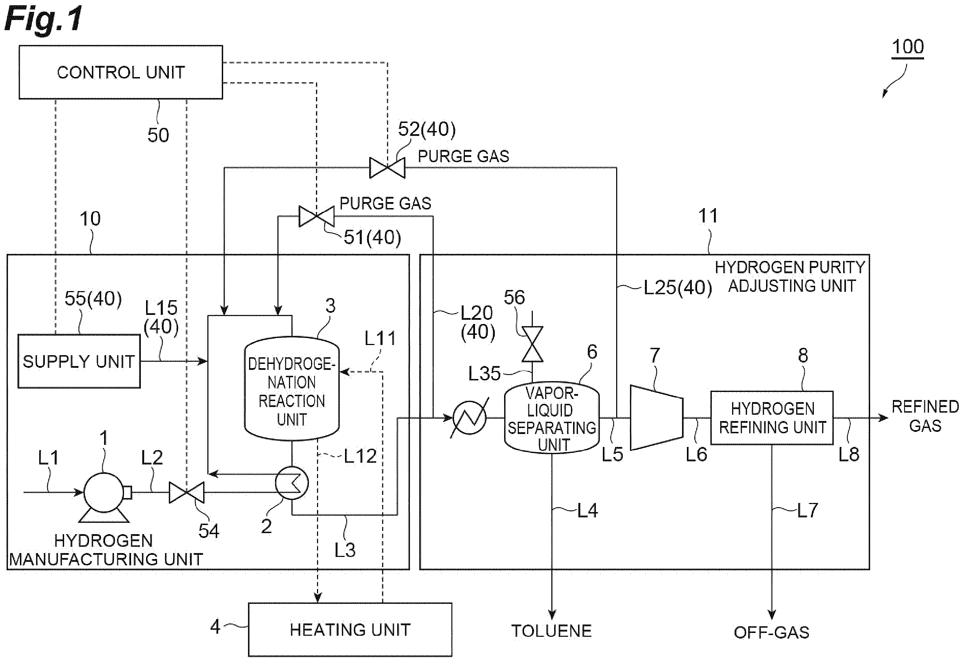

FIG. 1 is a block diagram illustrating a configuration of a hydrogen supply system according to an embodiment of the present disclosure.

### Description of Embodiments

Hereinafter, a preferred embodiment of a hydrogen supply system according to the present disclosure will be described in detail with reference to the drawings. In the following description, the same reference signs will be assigned to the same parts or parts corresponding to each other, and duplicate description will be omitted.

FIG. 1 is a block diagram illustrating a configuration of a hydrogen supply system according to an embodiment of the present disclosure. The hydrogen supply system 100 uses an organic compound (a liquid at a room temperature) as a raw material. In addition, in the process of refining hydrogen, dehydrogenation products (organic compounds (liquids at a room temperature)) acquired by dehydrogenating the organic compound (a liquid at a room temperature) that is a raw material is eliminated. As an organic compound that is a raw material, for example, there is an organic hydride. A preferred example of the organic hydride is a hydride acquired by causing hydrogen produced in a large quantity by an oil refinery to react with aromatic hydrocarbons. In addition, the organic hydride is not limited to an aromatic hydrogen compound and may be also be a 2-propanol system (hydrogen and acetone are generated). The organic hydride can be transported to the hydrogen supply system 100 as a liquid fuel like gasoline or the like using a tank lorry or the like. In this embodiment, as the organic hydride, methyl cyclohexane (hereinafter, referred to as MCH) is used. Other than that, as the organic hydride, a hydride of an aromatic hydrocarbon such as cyclohexane, dimethyl cyclohexane, ethyl cyclohexane, decalin, methyl decalin, dimethyl decalin, ethyl decalin, or the like may be applied. In addition, aromatic compounds having a particularly large hydrogen content are preferred examples. The hydrogen supply system 100 can supply hydrogen to a fuel cell vehicle (FCV) and a hydrogen engine vehicle. In addition, it also can be applied to a case in which hydrogen is manufactured from natural gas mainly composed of methane, LPG mainly composed of propane, or a liquid hydrocarbon raw material such as gasoline, gas oil, or kerosene.

As illustrated in FIG. 1, the hydrogen supply system 100 according to this embodiment includes a compression unit 1, a heat exchange unit 2, a dehydrogenation reaction unit 3, a heating unit 4, a vapor-liquid separating unit 6, a compression unit 7, and a hydrogen refining unit 8. Among these, the compression unit 1, the heat exchange unit 2, and the dehydrogenation reaction unit 3 belong to a hydrogen manufacturing unit 10 that manufactures a hydrogen-containing gas. In addition, the vapor-liquid separating unit 6, the compression unit 7, and the hydrogen refining unit 8 belong to a hydrogen purity adjusting unit 11. Furthermore, the hydrogen supply system 100 includes lines L1 to L12. In this embodiment, a case in which MCH is employed as a raw material, and a dehydrogenation product eliminated in the process of refining hydrogen is toluene will be described as an example. Actually, although not only toluene but MCH that has not reacted and has a small quantity of byproducts and impurities are present, in this embodiment, these are regarded as having been mixed into the toluene and exhibit the same behavior as that of toluene. Thus, in the following description, it is assumed that MCH that has not reacted and byproducts are included in references to "toluene".

The lines L1 to L12 are flow passages through which MCH, toluene, a hydrogen-containing gas, an off-gas, high-impurity hydrogen, or a heating medium passes. The line L1 is a line for enabling the compression unit 1 to draw MCH from an MCH tank not illustrated in the drawing and connects the compression unit 1 and the MCH tank to each other. The line L2 connects the compression unit 1 and the dehydrogenation reaction unit 3 to each other. The line L3 connects the dehydrogenation reaction unit 3 and the vapor-liquid separating unit 6 to each other. The line L4 connects the vapor-liquid separating unit 6 and a toluene tank not illustrated in the drawing to each other. The line L5 connects the vapor-liquid separating unit 6 and the compression unit 7 to each other. The line L6 connects the compression unit 7 and the hydrogen refining unit 8 to each other. The line L7 connects the hydrogen refining unit 8 and a supply destination of the off-gas to each other. The line L8 connects the hydrogen refining unit 8 and a refined gas supply device not illustrated in the drawing to each other. The lines L11 and L12 connect the heating unit 4 and the dehydrogenation reaction unit 3 to each other. The lines L11 and L12 circulate a heating medium.

The compression unit 1 supplies MCH that is a raw material to the dehydrogenation reaction unit 3. In addition, the MCH transported from the outside of the hydrogen supply system 100 by a tank lorry or the like is stored in the MCH tank. The MCH stored in the MCH tank is supplied by the compression unit 1 to the dehydrogenation reaction unit 3 through the lines L1 and L2.

The heat exchange unit 2 performs heat exchange between MCH circulating in the line L2 and a hydrogen-containing gas circulating in the line L3. The temperature of the hydrogen-containing gas that has exited from the dehydrogenation reaction unit 3 is higher than that of the MCH. Thus, in the heat exchange unit 2, the MCH is heated using the heat of the hydrogen-containing gas. In accordance with this, the MCH is supplied to the dehydrogenation reaction unit 3 in a state in which the temperature thereof is raised. In addition, the MCH is combined with the off-gas supplied from the hydrogen refining unit 8 through the line L7 and is supplied to the dehydrogenation reaction unit 3.

The dehydrogenation reaction unit 3 is a device that acquires hydrogen by causing a dehydrogenation reaction of MCH. In other words, the dehydrogenation reaction unit 3 is a device that extracts hydrogen from MCH using a dehydrogenation reaction using a dehydrogenation catalyst. Although the dehydrogenation catalyst is not particularly limited, for example, it is selected from a platinum catalyst, a palladium catalyst, and a nickel catalyst. These catalysts may be carried in a carrier such as alumina, silica, titania, or the like. A reaction of an organic hydride is a reversible reaction, and the direction of the reaction changes in accordance with reaction conditions (a temperature and a pressure) (having a restriction of a chemical balance). On the other hand, the dehydrogenation reaction is constantly an endothermal reaction and is a reaction in which the number of molecules increases. Thus, conditions of a high temperature and a low pressure are advantageous. Since the dehydrogenation reaction is an endothermic reaction, the dehydrogenation reaction unit 3 supplies heat from the heating unit 4 through a heating medium circulating through the lines L11 and L12. The dehydrogenation reaction unit 3 has a mechanism capable of heat exchange between MCH flowing in the dehydrogenation catalyst and a heating medium from the heating unit 4. A hydrogen-containing gas extracted from the dehydrogenation reaction unit 3 is supplied to the vapor-liquid separating unit 6 through the line L3. The hydrogen-containing gas of the line L3 is supplied to the vapor-liquid separating unit 6 in a state in which toluene that is a liquid is contained as a mixture.

The heating unit 4 heats a heating medium and supplies the heating medium to the dehydrogenation reaction unit 3 through the line L11. The heating medium after heating is returned to the heating unit 4 through the line L12. Although the heating medium is not particularly limited, oil or the like may be employed. In addition, any heating unit 4 can be employed, as long as it can heat the dehydrogenation reaction unit 3. For example, the heating unit 4 may directly heat the dehydrogenation reaction unit 3 or may heat MCH supplied to the dehydrogenation reaction unit 3, for example, by heating the line L2. In addition, the heating unit 4 may heat both the dehydrogenation reaction unit 3 and MCH supplied to the dehydrogenation reaction unit 3. For example, a burner or an engine may be employed as the heating unit 4.

The vapor-liquid separating unit 6 is a device that separates toluene from a hydrogen-containing gas. The vapor-liquid separating unit 6 supplies a hydrogen-containing gas containing toluene as a mixture and performs vapor-liquid separation into hydrogen that is vapor and toluene that is a liquid. The hydrogen-containing gas supplied to the vapor-liquid separating unit 6 is cooled by the heat exchange unit 2. In addition, the vapor-liquid separating unit 6 may be cooled by a cooling medium from a cold source. In such a case, the vapor-liquid separating unit 6 has a mechanism capable of performing heat exchange between a hydrogen-containing gas in the vapor-liquid separating unit 6 and a cooling medium from a cold source. The toluene separated by the vapor-liquid separating unit 6 is supplied to a toluene tank not illustrated in the drawing through the line L4. The hydrogen-containing gas separated by the vapor-liquid separating unit 6 is supplied to the hydrogen refining unit 8 through the lines L5 and L6 in accordance with the pressure of the compression unit 7. In addition, when a hydrogen-containing gas is cooled, a part (toluene) of this gas is liquefied and can be separated from a gas (hydrogen), which has not been liquified, by the vapor-liquid separating unit 6. When the temperature of the gas is lowered, the efficiency of separation becomes high, and when the pressure is raised, liquification of toluene progresses further.

The hydrogen refining unit 8 eliminates a dehydrogenation product (toluene in this embodiment) from the hydrogen-containing gas that has been separated into vapor and a liquid by the vapor-liquid separating unit 6. In accordance with this, the hydrogen refining unit 8 refines the hydrogen-containing gas, thereby acquiring high-purity hydrogen (a refined gas). The acquired refined gas is supplied to the line L8. In addition, the off-gas generated by the hydrogen refining unit 8 is supplied to the dehydrogenation reaction unit 3 through the line L7.

The hydrogen refining unit 8 differs in accordance with an employed hydrogen refining method. More specifically, in a case in which membrane separation is used as the hydrogen refining method, the hydrogen refining unit 8 is a hydrogen separating device including a hydrogen separation membrane. In addition, in a case in which a pressure swing adsorption (PSA) method or a temperature swing adsorption (TSA) method is used as a hydrogen refining method, the hydrogen refining unit 8 is an adsorption elimination device including a plurality of adsorption towers storing an adsorbent adsorbing impurities.

A case in which the hydrogen refining unit 8 uses membrane separation will be described. In this method, by causing a hydrogen containing gas pressed with a predetermined pressure by a compression unit (not illustrated) to be transmitted through a membrane heated to a predetermined temperature, a dehydrogenation product is eliminated, and a hydrogen gas (refined gas) with high impurity can be acquired. The pressure of the gas that has been transmitted through a membrane is lower than the pressure before transmission of the membrane. On the other hand, the pressure of a gas that has not been transmitted through a membrane is approximately the same as predetermined pressure before transmission through the membrane. At this time, a gas that has not been transmitted through the membrane corresponds to an off-gas of the hydrogen refining unit 8.

The type of membrane applied to the hydrogen refining unit 8 is not particularly limited, and a porous membrane (a membrane separating using a molecular flow, a membrane separating using a surface diffusion flow, a membrane separating using a capillary condensation reaction, a membrane separating using a molecular sieve reaction, or the like) or a non-porous membrane may be applied. As a membrane applied to the hydrogen refining unit 8, for example, a metal membrane (PbAg-based, PbCu-based, Nb-based, or the like), a Zeolite membrane, an inorganic membrane (a silica membrane, a carbon membrane, or the like), or a polymer membrane (a polyimide membrane or the like) can be employed.

A case in which, as an elimination method used by the hydrogen refining unit 8, a PSA method is employed will be described. An adsorbent used in the PSA method has a property of adsorbing toluene contained in a hydrogen-containing gas under a high pressure and detaching the adsorbed toluene under a low pressure. The PSA method uses such a property of the adsorbent. In other words, by forming a high pressure inside the adsorption tower, toluene contained in a hydrogen-containing gas is adsorbed by an adsorbent and is eliminated, and a hydrogen gas (a refined gas) with high purity is acquired. In a case in which an adsorption function of the adsorbent is weakened, by forming a low pressure inside the adsorption tower, toluene adsorbed by the adsorbent is detached, and the detached toluene is eliminated from the inside of the adsorption tower by causing a part of the eliminated refined gas to reversely flow, whereby the adsorption function of the adsorbent is restored. At this time, a hydrogen-containing gas containing at least hydrogen and toluene that is discharged by eliminating toluene from the inside of the adsorption tower corresponds to an off-gas from the hydrogen refining unit 8.

A case in which a TSA method is employed as the elimination method used by the hydrogen refining unit 8 will be described. An adsorbent used in the TSA method has properties of adsorbing toluene contained in a hydrogen-containing gas under a room temperature and detaching the adsorbed toluene under a high temperature. The TSA method uses such properties of the adsorbent. In other words, by forming a room temperature inside the adsorption tower, toluene contained in a hydrogen-containing gas is adsorbed by the adsorbent and is eliminated, whereby a hydrogen gas (refined gas) with high purity is acquired. In a case in which an adsorption function of the adsorbent is weakened, by forming a high temperature inside the adsorption tower, toluene adsorbed by the adsorbent is detached, and the detached toluene is eliminated from the inside of the adsorption tower by causing a part of the eliminated refined gas to reversely flow, whereby the adsorption function of the adsorbent is restored. At this time, a hydrogen-containing gas containing at least hydrogen and toluene that is discharged by eliminating toluene from the inside of the adsorption tower corresponds to an off-gas from the hydrogen refining unit 8.

Subsequently, characteristic parts of the hydrogen supply system 100 described above will be described. As illustrated in FIG. 1, the hydrogen supply system 100 includes a hydrogen supply unit 40 and a control unit 50.

The hydrogen supply unit 40 supplies hydrogen to the dehydrogenation reaction unit 3. In a case in which generation of a hydrogen-containing gas in the dehydrogenation reaction unit 3 stops, the control unit 50 causes the hydrogen supply unit 40 to supply hydrogen to the dehydrogenation reaction unit 3. In accordance with this, the hydrogen supply unit 40 can insert hydrogen into the inside of the dehydrogenation reaction unit 3 at the time of stopping the generation.

More specifically, the hydrogen supply unit 40 includes a purge gas line L20 that supplies a hydrogen-containing gas between the dehydrogenation reaction unit 3 and the vapor-liquid separating unit 6 to the dehydrogenation reaction unit 3 and a valve 51 disposed in this purge gas line L20. The purge gas line L20 branches from the line L3 and extends to the line L2.

In addition, the hydrogen supply unit 40 includes a purge gas line L25 that supplies the hydrogen-containing gas separated by the vapor-liquid separating unit 6 to the dehydrogenation reaction unit 3 and a valve 52 disposed in this purge gas line L25. The purge gas line L25 branches from the line L5 and extends to the line L2. In addition, the purge gas line L25 may branch from the line L6.

In addition, the hydrogen supply unit 40 includes a supply unit 55 that supplies hydrogen from the outside of the hydrogen supply system 100 and a purge gas line L15 that supplies hydrogen from this supply unit 55 to the dehydrogenation reaction unit 3. The purge gas line L15 is connected to the line L2. For example, the supply unit 55 is composed of a tank storing hydrogen, a pump that transfers hydrogen to this tank, and the like.

In addition, the hydrogen supply unit 40 may include at least one of the purge gas line L20 and the purge gas line L25. In other words, the hydrogen supply unit 40 may include any one of the purge gas lines L20 and L25 or may include both the purge gas lines L20 and L25. The purge gas line L15 is not an essential structure and thus may be installed as necessary, or may be omitted.

Next, operations of the control unit 50 will be described. In a case in which the dehydrogenation reaction stops, the control unit 50 closes the valve 54 of the line L2 and stops supply of a raw material to the dehydrogenation reaction unit 3. In this stage, in the dehydrogenation reaction unit 3, a raw material that has not reacted, a dehydrogenation product, and the like are present. In this state, the dehydrogenation reaction unit 3 is in a high-temperature state.

Next, the control unit 50 supplies hydrogen as a purge gas (in other words, hydrogen used for inhibiting deterioration of a dehydrogenation catalyst of the dehydrogenation reaction unit 3) to the dehydrogenation reaction unit 3 by controlling the hydrogen supply unit 40. More specifically, the control unit 50 extracts a hydrogen-containing gas from between the dehydrogenation reaction unit 3 and the vapor-liquid separating unit 6 using the purge gas line L20 by opening the valve 51 and supplies the extracted hydrogen-containing gas to the dehydrogenation reaction unit 3. Alternatively, the control unit 50 extracts a hydrogen-containing gas from the vapor-liquid separating unit 6 using the purge gas line L25 by opening the valve 52 and supplies the extracted hydrogen-containing gas to the dehydrogenation reaction unit 3. Alternatively, the control unit 50 supplies hydrogen to the dehydrogenation reaction unit 3 through the purge gas line L15 by operating the supply unit 55. In addition, the control unit 50 may supply a hydrogen-containing gas through one of the purge gas lines L20 and L25 or may supply a hydrogen-containing gas through both the purge gas lines L20 and L25. The operation of the control unit 50 supplying a hydrogen-containing gas through the purge gas line L15 is not essential and may be formed as necessary.

As described above, the hydrogen supply unit 40 can purge a non-reacting raw material and a dehydrogenation product remaining inside the dehydrogenation reaction unit 3 with hydrogen. Here, hydrogen that has passed through the dehydrogenation reaction unit 3 out of hydrogen supplied by the hydrogen supply unit 40 may be discharged to the outside of the system as it is. For example, a discharge line L35 open to the outside of the system is disposed on an upper end side of the vapor-liquid separating unit 6. Hydrogen that has passed through the dehydrogenation reaction unit 3 may be discharged from the discharge line L35 by opening the valve 56. In addition, after a liquid part (a non-reacting raw material and a dehydrogenation product) in the dehydrogenation reaction unit 3 is sufficiently purged, a part or the whole of the hydrogen that has passed through the dehydrogenation reaction unit 3 may be recycled. In the case of recycling, hydrogen that has passed through the dehydrogenation reaction unit 3 is returned again to the dehydrogenation reaction unit 3.

In the control unit 50, a time until when hydrogen is continued to be supplied by the hydrogen supply unit 40 after stopping the dehydrogenation reaction unit 3 is not particularly limited. For example, the control unit 50 may stop the supply of hydrogen from the hydrogen supply unit 40 at a timing at which the temperature of the dehydrogenation reaction unit 3 is lowered to a predetermined temperature or less or may stop the supply of hydrogen from the hydrogen supply unit 40 when a time set in advance elapses.

In addition, as described above, the control unit 50 may not supply hydrogen from all the purge gas lines L20, L25, and L15 and may supply hydrogen from at least one of the purge gas lines L20 and L25. Furthermore, the control unit 50 may perform such switching that hydrogen is supplied from one of the purge gas lines L20, L25, and L15 on the basis of a timing. For example, the control unit 50, first, supplies hydrogen using the purge gas line L20 and, when hydrogen runs out in the line, may supply hydrogen using the purge gas line L25 or the like. In addition, when hydrogen of the purge gas lines L20 and L25 runs out, the control unit 50 may supply hydrogen using the purge gas line L15. Furthermore, in a case in which the hydrogen supply unit 40 includes only one of the purge gas lines L20 and L25, the switching performed by the control unit 50 as described above may not be performed.

Next, operations and effects of the hydrogen supply system 100 according to this embodiment will be described.

In the hydrogen supply system 100, the dehydrogenation reaction unit 3 acquires a hydrogen-containing gas by causing a dehydrogenation reaction of a raw material including a hydride. The dehydrogenation reaction unit 3 performs a dehydrogenation reaction in a state in which a dehydrogenation catalyst is heated. Here, in a case in which generation of the hydrogen-containing gas in the dehydrogenation reaction unit 3 stops, the control unit 50 supplies hydrogen to the dehydrogenation reaction unit 3. In accordance with this, even when generation of hydrogen-containing gas stops, a state in which hydrogen is present in the dehydrogenation reaction unit 3 is formed. Thus, in accordance with the dehydrogenation reaction unit 3 being in a high-temperature state and a state in which hydrogen is not present being formed, deposition of coke in the dehydrogenation catalyst can be avoided. As described above, deterioration of the dehydrogenation catalyst of the dehydrogenation reaction unit 3 can be inhibited.

Furthermore, the hydrogen supply unit 40 supplies at least one of a hydrogen-containing gas between the dehydrogenation reaction unit 3 and the vapor-liquid separating unit 6 separating a dehydrogenation product from the hydrogen-containing gas and a hydrogen-containing gas separated by the vapor-liquid separating unit 6 separating a dehydrogenation product from a hydrogen-containing gas to the dehydrogenation reaction unit 3. In this way, the hydrogen supply unit 40 supplies a hydrogen-containing gas on an upstream side of the hydrogen refining unit 8 to the dehydrogenation reaction unit 3. Thus, it is unnecessary to extract hydrogen used for inhibiting deterioration of the dehydrogenation catalyst of the dehydrogenation reaction unit 3 from the hydrogen refining unit 8, and thus energy input to the hydrogen refining unit 8 can be reduced. As described above, while deterioration of the dehydrogenation catalyst of the dehydrogenation reaction unit 3 is inhibited, system efficiency of the hydrogen supply system 100 can be improved.

In addition, in a case in which the hydrogen supply unit 40 supplies a hydrogen-containing gas between the dehydrogenation reaction unit 3 and the vapor-liquid separating unit 6 to the dehydrogenation reaction unit 3, the hydrogen supply unit 40 can supply the hydrogen-containing gas before vapor-liquid separation to the dehydrogenation reaction unit 3, and thus the system efficiency can be improved. Furthermore, in a case in which the vapor-liquid separating unit 6 cannot sufficiently achieve the function due to a malfunction of a liquid level indicator (a liquid level rise causing a hydrogen leakage, a liquid level fall, or the like) or the like, the vapor-liquid separating unit 6 can supply a hydrogen-containing gas from the purge gas line L20 to the dehydrogenation reaction unit 3.

In addition, in a case in which the hydrogen supply unit 40 supplies a hydrogen-containing gas separated by the vapor-liquid separating unit 6 to the dehydrogenation reaction unit 3, the hydrogen supply unit 40 can supply hydrogen of a high-purity state from which a dehydrogenation product has been eliminated (hydrogen having purity higher than hydrogen of the purge gas line L20) to the dehydrogenation reaction unit 3. Thus, both improvement of the system efficiency and use of hydrogen with high purity can be maintained with a good balance.

The hydrogen supply unit 40 may supply hydrogen from the outside. In such a case, the hydrogen supply unit 40 can supply hydrogen without caring about the remaining amount of hydrogen present within the system. Even in a case in which the amount of hydrogen as a purge gas is insufficient by only using a hydrogen-containing gas between the dehydrogenation reaction unit 3 and the vapor-liquid separating unit 6 and/or a hydrogen-containing gas separated by the vapor-liquid separating unit 6 or a case in which a hydrogen-containing gas cannot be supplied to the dehydrogenation reaction unit 3 in accordance with a purge gas pressure of the purge gas lines L20 and L25 due to an increase in the pressure loss, by supplying hydrogen from the outside of the hydrogen supply system 100, deterioration of the dehydrogenation catalyst can be effectively inhibited. In addition, hydrogen may be supplied from the outside of the hydrogen supply system 100 for initial startup or maintenance.

The present disclosure is not limited to the embodiment described above. For example, in the embodiment described above, although a hydrogen station used for FVC has been illustrated as a hydrogen supply system, for example, it may be a hydrogen supply system for a distributed power supply such as a home power supply, an emergency power supply, or the like.

The hydrogen supply system 100 may include at least one of the purge gas lines L20 and L25 as the hydrogen supply unit 40.

### Reference Signs List

3 Dehydrogenation reaction unit
6 Vapor-liquid separating unit
8 Hydrogen refining unit
40 Hydrogen supply unit
50 Control unit
100 Hydrogen supply system

## Claims

1. A hydrogen supply system supplying hydrogen, the hydrogen supply system comprising:
a dehydrogenation reaction unit acquiring a hydrogen-containing gas by performing a dehydrogenation reaction of a raw material containing a hydride;
a hydrogen supply unit supplying hydrogen to the dehydrogenation reaction unit; and
a control unit controlling the hydrogen supply system, wherein, in a case in which generation of the hydrogen-containing gas in the dehydrogenation reaction unit stops, the control unit causes the hydrogen supply unit to supply hydrogen to the dehydrogenation reaction unit, and
wherein the hydrogen supply unit supplies at least one of the hydrogen-containing gas between the dehydrogenation reaction unit and a vapor-liquid separating unit separating a dehydrogenation product from the hydrogen-containing gas and the hydrogen-containing gas separated by the vapor-liquid separating unit separating a dehydrogenation product from the hydrogen-containing gas to the dehydrogenation reaction unit.

2. The hydrogen supply system according to claim 1, wherein the hydrogen supply unit further supplies hydrogen from the outside to the dehydrogenation reaction unit.
